# EUROPEAN PATENT SPECIFICATION

(11) **EP 1 886 102 B1**
(45) Date of publication and mention of the grant of the patent: **07.11.2012**
(21) Application number: 06840906.9
(22) Date of filing: 13.04.2006
(51) Int. Cl.: G01G 17/06, B01L 3/02, F16K 3/02

(54) **APPARATUS AND METHOD FOR STORING AND DISPENSING MATERIAL, ESPECIALLY IN MICRO QUANTITIES AND IN COMBINATION WITH LIMITED STARTING AMOUNTS**
VORRICHTUNG UND VERFAHREN ZUR LAGERUNG UND AUSGABE VON MATERIAL, V.A. IN MIKROMENGEN UND IN KOMBINATION MIT BEGRENZTEN ANFANGSMENGEN
APPAREIL ET PROCEDE DE STOCKAGE ET DE DISTRIBUTION D UNE SUBSTANCE, NOTAMMENT EN QUANTITES MICROSCOPIQUES ET EN QUANTITES DE DEPART LIMITEES

(30) Priority: 18.05.2005 US 131975
(43) Date of publication of application: 13.02.2008
(73) Proprietor: Freeslate, Inc., Sunnyvale, CA 94085 (US)
(72) Inventor: PLUVINAGE, Loic, CH-74100 Ville la Grande (CH); VALELLA, Antonio, CH-1218 Le Grand Saconnex (CH); BERINI, Gian-Luigi, CH-1218 Dardugny (CH)
(74) Representative: Eisenführ, Speiser & Partner
(86) International application number: PCT/EP2006/003457
(87) International publication number: WO 2007/054135

(56) References cited:
- EP-A2- 0 304 093
- WO-A-02/44669
- WO-A-95/18365
- WO-A-2004/042334
- US-A- 5 145 009

## Description

### FIELD OF THE INVENTION

The present invention relates to a pipette and a method for dispensing material, especially small amounts of solid material in powdery or granular form.

### BACKGROUND OF THE INVENTION

In various industries, such as the chemical and the pharmaceutical industry handling of non-liquid materials in solid or powdery form is used for preparing mixtures, drugs, tests, in-process products or final products. Several dispensers for handling powdery materials are known from prior art and it is inherent to those devices that in general they are not suitable to precisely dispense different amounts of material, especially when the amount of material to be dispensed is small (e.g. in the range of milligrams). Most important, these devices are not suitable to dispense powdery materials if the starting amount is very limited, such as e.g. 30 mg or less. However, in the chemical and the pharmaceutical industry, for research, development and production, it is important to be able to precisely dose small and very small amounts of powders and solids, with different flow characteristics and independent of the starting amount.

### DESCRIPTION OF PRIOR ART

US-Patent 5,145,009 is directed to an apparatus for metering dry and pulverulent pourable material such as dye powder in a laboratory dyeing line for textiles. The apparatus is having a discharge container which has a closable outlet in its lower region. Scales for metering the amount of material that is to be conveyed from the outlet of the container are arranged on the underside of the container. The container is having a valve body that tapers towards the top and can be displaced vertically downwards. The valve body is arranged rotatable in closed and open position having the capability for conveying the material in the direction towards the outlet opening therefore performing a dual function. One disadvantage consists in that the device is not suitable for small amounts of material.

WO02/29371 is directed to a dosing unit for releasing a powdery substance and a scale for determining the amount of substance released. The dosing unit comprises a storage container that contains the substance to be released and is mounted on a scale in such a way that the scale measures the weight of the dosing unit. As the scale measures the weight of the dosing unit including the storage container and the substance, the amount of the substance released can be determined by subtraction.

WO03/098170 discloses a device for dosing powdery substances. The device comprises a substance-receiving device which is provided with a plurality of compartments suitable to receive a substance that is to be dosed and which can be emptied individually. The device also comprises an evacuation device for emptying the compartments, a scale determining the quantity of dosed substance and means for controlling the evacuation of the compartments according to the quantity of the dosed substance.

WO2005/002654 is directed to a device for dispensing individual doses of powder from pockets of a disc-shaped carrier. The doses are dispensed by rupturing a foil by pressure on an opposite side surface. The device provides individual flow paths for each pocket. Split airstreams are allowing improved entrainment of powder and a cam mechanism is provided for outwardly rupturing the pockets. Further an indexing mechanism is linked to the cam mechanism and a dose counter.

US2005/0040185 describes an apparatus for dispensing small quantities of particles. The apparatus comprises a hopper provided with a sieve at a bottom portion thereof. The hoper defining a powder-containing zone above the sieve which in use contains powder to be dispensed therefrom trough the sieve. The hopper is hold by a support so that the hopper can in use be held above a container into which the dispensed powder is to be received. At least one actuator is provided for delivering impact energy to the hopper for causing powder to be dispensed through the sieve when the hopper receives the impact energy.

WO03/026965 is from the same applicant as US2005/0040185 and also describes an apparatus for dispensing small quantities of particles. The apparatus comprises a hopper provided with a sieve at a bottom portion thereof. The hoper defining a powder-containing zone above the sieve which in use contains powder to be dispensed therefrom trough the sieve. The hopper is hold by a support so that the hopper can in use be held above a container into which the dispensed powder is to be received. At least one actuator is provided for delivering impact energy to the hopper for causing powder to be dispensed through the sieve when the hopper receives the impact energy. The actuator is arranged to deliver impact energy to the hopper from different directions and/or at different locations on the hopper.

WO2005/014397 describes a method and an apparatus for filling a container with powder in that an outlet of a hopper containing powder is positioned above an open end of the container. The hopper is mechanically agitated so as to cause powder to be transferred from the hopper to the container. By mechanically agitating the container it is ensured that the container is filled with powder at a predetermined density.

US-Patent 6,805,175 describes an apparatus for aspirating and dispensing powder. The apparatus comprises hopper having a powder transfer port and a suction port for connection to a source of suction to establish an upward flow of air through the transfer port. A gas flow control system varies the upward flow through the transfer at different velocities, whereby the velocities include an aspirating velocity for aspirating powder into the hopper through the transfer port to form a fluidized bed of powder in the hopper, and a dispensing velocity less than the aspirating velocity but sufficient to maintain fluidization of the bed while allowing powder from the bed to gravitate through the transfer port for dispensing into one or more destination receptacles. A method of aspirating and dispensing powder is also disclosed.

WO02/11800 discloses a powder delivery device for the delivery of a physiologically active agent in powdered form into a patient's nasal cavity. The device comprises a bulk reservoir for containing multiple doses of powder, a powder delivery passage for the forced flow of gas with a dose of said powder entrained therein to a patient. A powder metering unit for metering out a dose of powder from said bulk reservoir is provided to align a metered dose with said gas flow passage.

WO03/066437 is directed to a method and an apparatus for introducing powder into a pocket using a dosator. The dosator is having an elongate cavity with an open end and a plunger opposite the open end moveable along the cavity so as to define a space of variable volume. The plunger defines a volume which is greater than that of the pocket. By inserting the open end of the dosator into a source of powder the volume is filled with powder. By positioning the open end over the pocket and driving the plunger the powder is expelled from the open end into the pocket and compressed to a predetermined bulk density. US2001/0027823 discloses a dispensing apparatus for granular or powdery bulk materials. The apparatus includes a balance to weigh doses of material being dispensed, a reservoir container and a cover to close a downward-facing opening of the reservoir container. A conveying and delivering device the cover which has a vertically movable, rotary conveyor body designed so that it can substantially close off the dispensing outlet for the bulk material. The conveyor body has a ring-shaped bottom and a ring-shaped conveyor channel which is recessed in the cover. The outlet is arranged in the ring-shaped channel and is designed to deliver a directed and locally concentrated stream of bulk material.

WO02/090896 is directed to a powder measure-dispensing cap. The dispensing cap comprises a body with a feed opening. The feed opening is supplied by at least one endless screw.

GB1488719 describes a dispenser for dispensing liquids or powdery materials out of an aerosol container in which the liquids or powdery materials are stored together with a propellant

CA2100046 discloses a disposable dispensing device for dispensing solid materials in powder or granular form such as a spoon full of sugar into a cup of coffee. The dispensing device allows to dispense measured quantities which avoids having to use a teaspoon or other measuring device. The device comprises a longitudinal passage and a sliding member with a substantially rectangular cross-section. The sliding member is movable from a first position to a second position such that a dispenser aperture may be opened or dosed.

CA2250574 discloses a dispenser for substances in powder or granular form. The dispenser enables a multiplicity of doses of a substance in powder or granular form contained in a reservoir to be dispensed in succession. To form a dose a shaft must be rotated relative to a part of the dispenser, whereby the shaft has to be arranged substantially vertical while the dose is being formed. It is not foreseen to dispense individual amounts of materials.

US5573340 describes a device for dispensing a liquid or powdery product. This device includes a container and a stopper for sealing the container whereas a pouch made of an elastic substance with a slit is placed inside the neck of the container. The slit is open when a stopper seals the container. The slit closes when the stopper is removed from the container.

US3662930 is directed to a dispensing package for adding a medicine to a parental solution container which is characterized by a plug disposed between a medicament reservoir and a discharge conduit. The plug has a labyrinth through which solid medicament must pass on discharge. The function of the labyrinth is to present the additive powder from being spilled or misdistributed out of the package.

WO 2004/042334 Al is directed to accurate powder metering. The disclosed apparatus of this document comprises a container of powder, including an adjustable opening through which the powder is dispensed and said opening is directly communicating with the container. There are further means provided for adjusting said opening and means for controlling the amount of powder dispensed in relation with said adjusting means. In order to ease the dispensing, there are means for vibrating and/tapering the container. Said apparatus is adapted for automatically dispensing powder and there are means for controlling the amount of powder connected to the means for controlling and the means for vibration or tapering.

WO 95/18365 relates to a powder pipette comprising a pick-up chamber, to be introduced through a lower end into a powder to be picked up, and having a first lateral filling orifice arranged above said lower end and a second variable dispensing opening circumscribed at the lower end of the chamber, and controlled by a pusher in order to deliver a predetermined amount of powder.

From the prior art devices are known wherein predetermined amounts of material are encapsulated in appropriate standardized containers or capsules of different sizes made out of an inert material such as glass. With these devices the minimum amount possible to be dispensed is given by the smallest standardized container available and a fine graduation is therefore difficult to achieve. A further disadvantage is the logistic effort necessary to produce, handle and store the different containers. Still a further disadvantage consists in that the remains of the containers have to be disposed or separated form the mixtures. Prepacked containers comprising material to be dispensed may be mistaken. Therefore it must be ensured that the risk of mistaking is minimised or completely avoided.

The dispensers known from prior art are not suitable for automatic dispensing of small starting amounts in the range of that needs to be dispensed into typically used vessels and receptacles, such as plates, vials, bottles, capsules, etc., in very low quantities, like 1 mg or less. One reason for this problem consists in that the known devices are to large or have to many parts involved such that, due to the large surface of the parts involved, small quantities of powder may not be handled. Also, the waste of the powder, caused by the known devices, is considerable. Another drawback is that the devices known from prior art in general consist of a large number of parts which are difficult to manufacture, assemble, maintain and clean. A further draw back is that the devices known from prior art have to be adjusted according to the physical characteristics of the material to be dispensed or cannot be used for dispensing of cohesive powders. In addition, the known devices do loose powder during operation because they are not sufficiently sealed. Uncontrolled loss of powder may cause serious problems and contamination.

### PROBLEM TO BE SOLVED

It is one object of the invention to provide a device which is suitable to precisely dispense small and very small amounts of at least one material in powdery or granular form, especially when the starting amount is limited. It is a further object of the invention to provide a device that prevents negative contamination, spilling or loss of material. It is a further object of the invention to provide a device which allows recovering remaining powder without negative loss. It is a further object of the invention to provide a device for automatically dispensing at least one material in powdery or granular form. It is still a further object to provide a device which is suitable to reduce the risk of mistaking.

### SUMMARY OF THE INVENTION

The invention comprises a pipette for manual dispensing of solid material according to claim 1 comprising a cartridge holding device interconnected to a dispensing device which has, compared to the devices known from prior art, a simple setup suitable to be made of metal or injection moulded plastic, depending on the field of application. The device is made that it is easy to be filed and to be emptied without the need of extensive cleaning. Therefore it is relevant that only a limited amount of parts are in direct contact with the material to be dispensed whereby these parts are easy to clean and to maintain. Compared to the prior art, one advantage of the invention consists in that the device offers the possibility for miniaturisation which is one condition for handling-small amounts of material: The device is further suitable to be used with materials in powdery and/or granular form having different physical characteristics such as e.g. particle size, shape and form, density, humidity. The device further provides a high repeating accuracy such that it is e.g. possible to dispense thirty portions of 1 mg or sixty portions of 0.5 mg or a fraction of it, with a high accuracy by a single dispenser. Therefore the pipette according to the present invention is especially suitable to be used in laboratories e.g. of the pharmaceutical and biotechnological industry and particularly for small-scale scientific research. The device avoids any risk of cross-contamination since the openings can be sufficiently sealed if necessary.

To provide a high accuracy the device preferably comprises or is interconnectable to at least one scaling means to directly or indirectly measure the amount of material dispensed. For direct measuring the scaling device is interconnected to the dispensing device itself, measuring the amount of material leaving the dispensing device. Alternatively or in addition the scaling device, for indirect measuring, is interconnected to the container determined to receive the dispensed material.

The dispensing device in general comprises at least one compartment to receive a material to be distributed, a gate valve with variable opening, an agitator, and a conveyor. The gate valve, the agitator and the conveyor are driven by at least one drive mechanism which forms part of the dispensing device or to which the dispensing device may be interconnected by interfaces. In a preferred embodiment the agitator and the conveyor are incorporated in a single device. Depending on the field of application the dispensing device further comprises a storing means to hold information temporarily or permanent e.g. about the material, amount and condition of the material contained in the dispensing device. If appropriate the dispensing device may further comprise at least one sensor to retrieve information about the condition, such as humidity, temperature or electric conductivity, of the material contained in the dispenser.

A control unit to which the dispensing device may be interconnected controls the position and opening of the gate valve, the agitator and/or the conveyor. The control unit is, if present, further interconnected to the at least one scaling means to control or double check the amount dispensed from the dispensing device. The control unit may further comprise means to read out and store information from the storing means.

The dispensing device is designed as an exchangeable unit having a first standardized interface suitable to be interconnected with an appropriate second standardized interface of a controller. The controller is thereby suitable to receive different dispensing devices, e.g. of different size or containing different materials. When not interconnected to the controller the different dispensing devices are preferably stored in a storing unit tightly sealed. Exchanging of the dispensing devices takes preferably place by an exchanging device which is suitable to exchange the dispensing devices automatically.

Due to the large flexibility and the setup it is possible to provide an adapter means by which the dispensing device may be interconnected to existing control devices as known from the prior art. The adapter means is foreseen to transfer control variables and if appropriate feedback information between the dispensing device and the control device for adjusting the opening of the gate valve.

For handling small amounts of solid material, e.g. in powdery or granular form, it must be guaranteed that no needless waste and spilling of material takes place. One source of misspending with the devices known from the prior art often takes place in the area of the dispensing opening. The dispensing device therefore comprises a gate valve which solves this problem. In a general setup the dispensing device comprises a compartment for receiving a powdery material to be dispensed, whereby the compartment comprises a tapered lower end with a gate valve dispensing opening. The dispensing opening is opened and closed by a blend acting as part of a gate valve which is arranged such that it provides only minimum contact with the material stored in the compartment in that the rim of the opening acts as a wiper for the material in contact with the blend guaranteeing that the material in the compartment is not wasted. Therefore the blend is pressed firmly, e.g. by spring load, against a rim of the dispensing opening or an alternative edge such that no negative amount of material may enter between the rim of the opening and the blend. Good results have been achieved by an in one direction elastic blend closing the opening from a side. The blend is guided in appropriate guiding means guaranteeing that the blend is sufficiently firm pressed against the opening at least at one side. In a preferred embodiment the blend consists in a relatively thin band of elastic material guided in at least one longitudinal slot extending radially from the opening. The band of material is thereby formed and arranged such that at least in closed position it tightly closes the openings. The dispensing device may further comprise an agitator means to agitate the material stored in the compartment. If appropriate the gate valve and the agitator means comprise standardized interface means guaranteeing the exchangeability of the dispensing device. The compartment of the dispensing device may be designed such that it is hermetically closable. Especially the filling and the dispensing opening may be sealingly closed in an appropriate way to allow storing of the material within the dispensing device.

In a preferred embodiment the dispensing device comprises a compartment to receive material to be dispensed having an in general cylindrical first section which turns into an in general conical second section. At the apex of the second section the compartment comprises an opening (gate valve) which is arranged at an angle to the longitudinal axis of the first and the second section such that an oval shape of the opening results. The opening is sealed by a blend by which the opening can be released infinitely variable from fully closed to fully open. The position of the blend is adjusted by a first internal or external drive mechanism which is interconnected to the control unit. In the compartment, depending on the field of application, at least one agitator is arranged rotatable and/or movable in the direction of a centre axis activated by a second internal or external drive mechanism. The agitator is preferably suitable to interact along the full length of the compartment with the material stored in the compartment. Good results have been achieved by a long thin wire-like structure extending along the inside contour of the compartment. If appropriate the conveyer can have another design depending on the material to be dispensed, such as helix like shapes and/or grating like shapes and/or scraper like shapes. The conveyer/agitator can be designed as exchangeable parts.

The agitator on one hand is suitable to mix the material stored in the compartment and on the other hand may help as a conveyor means conveying the material to be dispensed through the opening at the apex of the second section of the compartment. Depending on the material to be dispensed at least one further agitator may be arranged within the compartment moving similar or counter clockwise to the first conveyor. The agitator thereby is suitable to take influence on the morphology, the distribution of grain of the material to be dispensed. The position of the agitator and the blend may be read out by sensor means and the information is provided to the control unit which is interconnected to the first and the second drive mechanism. It is obvious that the shape of the compartment may be different as long as it does not have any negative impact onto the functionality of the device.

To dispense material out of a dispensing device the following steps are necessary:
a) Interconnecting the dispensing device to a control unit;
b) If necessary activating the agitator to disperse the material stored in the compartment;
c) Opening the gate valve by retracting the blend until material starts to trickle through the opening of the gate valve and measuring the amount of material which has left by the scaling means and comparing it by the predetermined total amount of material to be dispensed;
d) If necessary activate, before or after the gate valve has been opened, the conveyor means to support the trickling of the material;
e) Adjusting the position of the blend until fully closing when the predetermined amount of material to be dispensed is achieved.

One advantage of the dispensing device is in that only a minimum amount of pieces, having a shape easy to be manufactured and maintained, are in direct contract with the material to be distributed. The device is designed such that it can be made in mass production as a returnable or a disposable unit, in other words in form of a returnable or disposable cartridge. By the herein disclosed invention it e.g. becomes possible to provide to customers a prepacked set of dispensing devices (cartridges) containing a certain amount of repeatably used materials in powdery form. The dispensing devices may then be stored in an appropriate storing device wherefrom they may be automatically retrieved by an appropriate handling device during production. To dispense material the handling device interconnects the dispensing device temporarily to a controller which controls the opening of the gate valve and the movement of the agitator and/or conveyor means. A sensor means interconnected to the controller measures the amount of material passing through the gate valve. Errors of mistaking are reduced in that each dispensing device may be marked by an appropriate tag, e.g. a radio frequency identification tag (RFID) and/or an optically readable tag such as a bar code, which is read out by the controller before material is dispensed. Furthermore the tag may be appropriate to hold and save information from the controller about the amount of material dispensed from the dispensing device, the age of the material stored in the dispensing device. In the storing device a further reading device may be foreseen appropriate to read out information from the tags of the dispensing devices. Thereby it becomes possible to gain information about the amount and the condition of the material available on stock.

The dispensing device is designed to be inserted in a pipette for dispensing of solid material, whereby the pipette acts primarily as a control unit for the pipette. The pipette in general comprises a cartridge holding device suitable to receive the dispensing device as described above, a first and a second driving means by which the opening of the gate valve opening and the agitator and/or conveyer of the inserted dispensing device can be operated. In a further embodiment the pipette comprises an electronic circuit which controls and triggers the valve gate opening and/or the conveying speed of the conveyer. If appropriate the pipette may comprise an interface by which it is connectable e.g. to an output signal of a scaling means such that the amount of material to be dispensed through the valve gate opening can be adjusted in relation to the signal of the scaling means. If appropriate the pipette can be designed to receive other cartridges with a different valve gate opening and/or conveyer system. Depending on the field of application a first driving mechanism may be incorporated as mechanical driving mechanism, e.g. comprising a lifting rod which is lifted by a ramp interconnected to a control button such that when the control button is pressed the ramp interacts with the lifting rod such that the lifting rod is lifted. A second drive mechanism is incorporated in form of an electric driving means interacting e.g. with an agitator and/or a conveyer. In a further embodiment the first and the second driving means are incorporated as electric driving means controlled manually and/or by an electronic circuit.

The dispensing device for storing and dispensing at least one material in solid form comprises a housing with a compartment for storing a material, a gate valve with a variable gate valve opening for dispensing the material and at least one standardised interface whereby the dispensing device may be exchangeably interconnected to at least one control unit having a corresponding interface to control the opening of the gate valve by a signal of at least one scaling means to control the amount of material dispensed. The compartment may have a tapered lower section whereby the gate valve opening is arranged at an apex of the tapered lower section. The gate valve opening may be closed by a blend which is supported by a rim of the gate valve opening. The blend may be guided in a notch extending radially with respect to the valve gate opening. The blend may consists in a band of elastic material. A scaling means may be integrated in the dispensing device. The scaling means may be interconnected to a supporting means supporting the dispensing device. The scaling means may be interconnected to a vessel suitable to receive material dispensed from the dispensing device. The dispensing device may further comprise an agitator means to agitate the material stored in the compartment The agitator means may comprise a standardised interface to interconnect the agitator means to a control unit and/or driving unit. The dispensing device may comprise at least one storing means to hold information about the material stored in the compartment. The displaceable blend may be designed sucht that it is suitable to release the gate valve opening infinitely variable.

A method for dispensing material by a dispensing unit according to the present invention comprises in general the following steps: a) Interconnecting a dispensing device comprising a material in a compartment sealingly closed by a gate valve to a control unit by a standardised interface; b) Dispensing material stored in the compartment by opening a gate valve opening in function of a signal of a scaling means interconnected to the control unit in that the amount of material which has left the compartment of the dispensing device is determined; c) Adjusting the position of the gate valve until fully closing of the gate valve opening when a predetermined amount of material to be dispensed is achieved. If appropriate The agitator means arranged in the compartment agitates the material stored in the compartment before or after the gate valve opening is opened. If appropriate information about the material contained in the dispending device stored in a storing means is exchanged with the control means. The information may be exchanged via the standardised interface.

To control the dispensing device a control unit is designed as a pipette for manual dispensing of solid material. The pipette according to the invention comprises a cartridge holding device suitable to be interconnected to a dispensing device according as described above. The pipette may comprise a first driving means to open and/or close a valve gate opening of a dispensing device and a second driving means to activate a conveyor to convey material from the dispensing device. The pipette may further comprise an electronic circuit to control the opening of the valve gate opening and/or the conveying speed of the conveyor. The pipette may further comprise an interface to interconnect the electronic circuit to a signal of a scaling means.

### BRIEF DESCRIPTION OF THE DRAWINGS

For a more complete understanding of the present invention, including its features and advantages, reference is now made to the detailed description of the invention, taken in conjunction with the accompanying drawings, in which:
- Fig.1: is showing a dispensing device in a perspective view;
- Fig. 2: the dispensing device according to figure 1 in an exploded view;
- Fig. 3: the dispensing device according to figure 1 in a section view along line DD;
- Fig. 4: a controller with a dispensing device and a rack of dispensing devices;
- Fig. 5: shows a pipette for dispensing of solid material from a dispensing device;
- Fig. 6: shows the pipette of Figure 5 and a dispensing device arranged outside;
- Fig. 7: shows the pipette of Figure 5 with an inserted dispensing device.

### DETAILED DESCRIPTION OFTHE PREFERRED EMBODIMENTS

Reference is now made in detail to embodiments of the invention, examples of which are illustrated in the accompanying drawings.

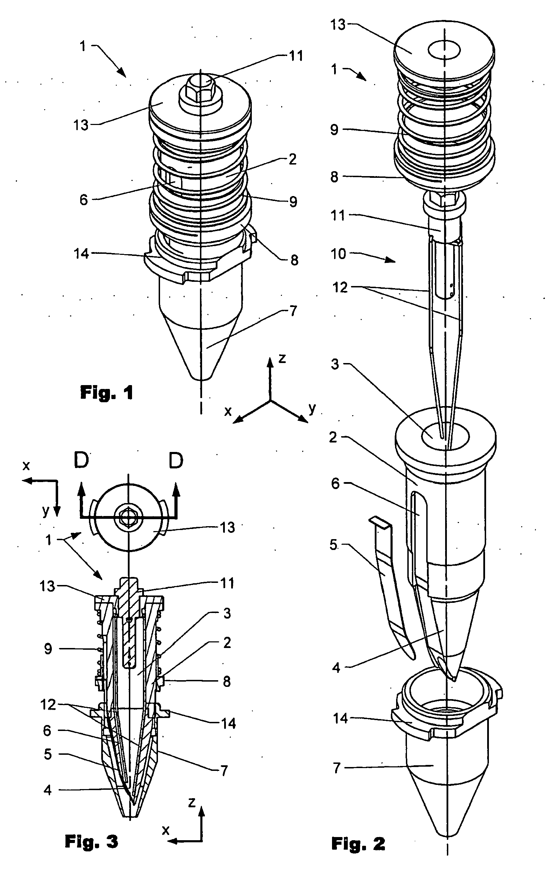

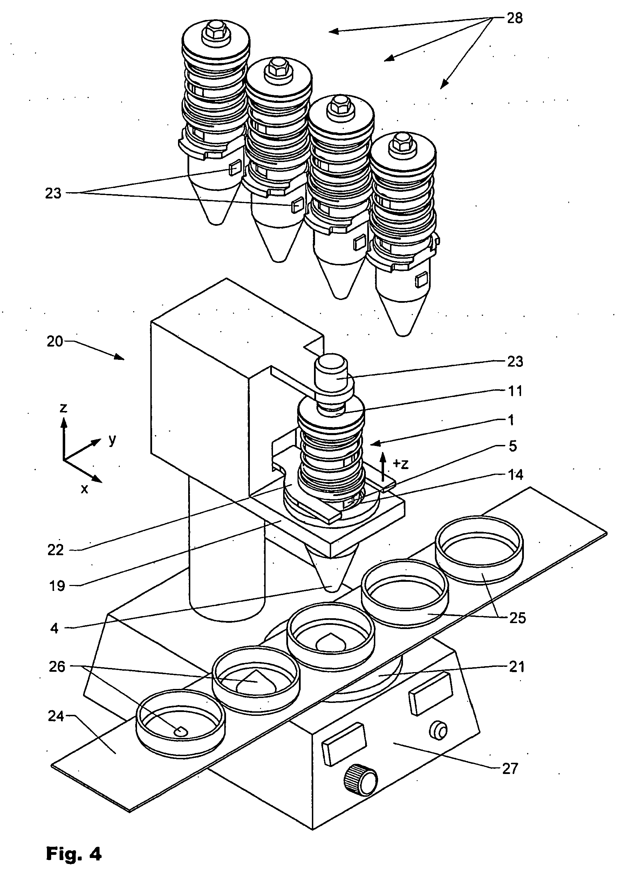

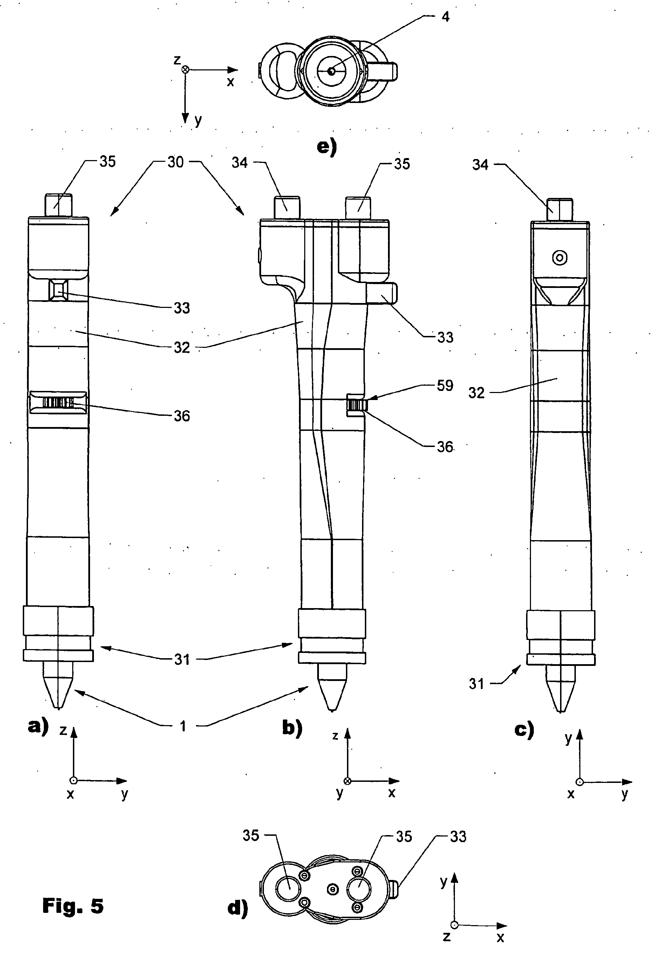

**Figure 1** shows a dispensing device 1, in form of a cartridge 1 in a perspective view and **figure 2** shows the dispensing device 1 according to Figure 1 in a disassembled manner such that the internal of the dispensing device is visible. **Figure 3** shows a cross-cut view along line DD through the dispensing device 1 according to Figures 1 and 2. **Figure 4** shows a dispensing device 1 attached to a bracket 19 of a controller 20 e.g. for scaling and/or automated dispensing of material into a vessel 25. **Figures 5** to **7** are showing a pipette 30 suitable to receive a dispensing device 1 for manual dispensing.

As visible in **Figures 1** to **3** the dispensing device 1 comprises a housing 2 surrounding a compartment 3 suitable to receive material to be dispensed. At the lower end the housing 2 comprises a gate valve opening 4 which is in closed position sealingly covered by a blend 5 which is supported by a rim of the opening 4. The blend 5 is arranged retractable in a notch 6 extending radially with respect to the opening along the outside of the housing 2. The notch 6 acts as a guiding means for the blend 5. The blade like blend 5 is made in the herein shown embodiment out of an elastic material such as spring steel or a similar material which is formed that it firmly interacts with the rim of the opening 4 at least partially. The blend is designed such that no negative amount of material may be pulled between the blend 5 and the housing 2.

As it can be seen the blend 5 has a bend and is held within the notch 6 by a sleeve 7 surrounding the lower part of the housing 2. Alternatively or in addition a further means may be present to hold the blend in place. Good results have been achieved with ring like elements firmly surrounding the lower part of the blend. The sleeve 7 comprises here a bayonet-type interlocking device 14 (standardized interface) by which the dispensing device 1 may be securely attached to a corresponding interlocking device of a control unit (see figure 3). The compartment 3 has in its upper area an in general cylindrical shape which turns into an in general tapered conical shape in its lower part in the region of the gate valve opening 4 which has in the shown embodiment an oval shape. The blend 5 is at its back end interconnected to a bushing 8 arranged movably in vertical direction (z) along the outside of the first section of the housing 2. The bushing 8 and the blend 5 are held in a closed position by a spring 9 which is arranged between the bushing 8 and a lower end of the housing 2. In the closed position the opening 4 is sealingly closed by blend 5 such that no material within the compartment 3 may uncontrollably exit through the opening 4. By moving the bushing 8 along the housing 2 (+z-direction); the spring 9 is pressed together and the blend 5 is retracted such that the opening 4 is released and material contained within the compartment 3 may exit. The opening 4 may be opened infinitely variable by moving the position of the blend 5. In that the blend is firmly pressed against the rim of the opening 4 the rim acts as a wiper for the material stored in the compartment 3 avoiding negative spilling of material.

Inside the compartment 3 an agitator 10 is arranged. The agitator 10 comprises a drive shaft 11 arranged rotatable around the central axis (z-axis) of the device 1. The drive shaft 11 comprises in the shown embodiment two shovels 12 reaching into the compartment 3. The shovels 12 of the shown embodiment are formed by two elastic wires here made out of stainless steel metal which are designed such that they move along the inner surface of the compartment 3. Depending on the field of application and the material to be dispensed the shovels can have a different shape or can be made out of a different material, e.g. injection moulded plastic.

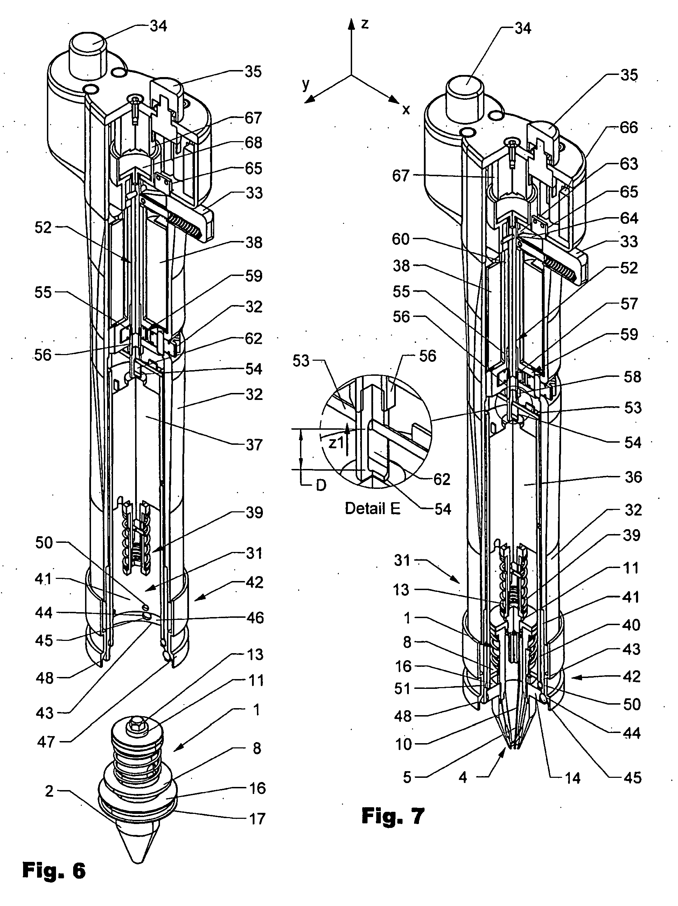

The drive shaft 11 is in the shown embodiment mounted rotatable around the central axis of the device in a cover 13 which closes the rear end of the compartment 3. At its rear end the drive shaft 11 comprises a standardized interface by which the drive shaft may be interconnected to a clutch of a drive unit (see figures 3 and 7).

**Figure 4** shows a dispensing device 1 attached to a bracket 19 of a controller 20 by the interlocking device 14. The control unit 20 further comprises a scaling device 21, a fork 22 which acts as a first drive mechanism suitable to displace the bushing 8 of the dispensing device 1 in vertical direction (+z-direction) and thereby controlling the opening of the gate valve 4. The drive shaft 11 of the dispensing device is interconnected to a second drive mechanism 23 which activates the agitator and or the conveyor unit arranged within the compartment of the dispensing device 1. On a conveyor unit 24 several containers 25 are arranged in line to receive a certain amount of material 26 dispensed from the dispensing device 1. The controller 20 further comprises or is interconnected to a central processing unit (CPU) 27 which controls and triggers the first and the second drive mechanisms 22, 23 and receives and processes data from the sensors controlling the opening of the gate valve, here the opening 4 in combination with the blend 5, and the agitator, respectively the conveyor unit within the dispensing device 1. If appropriate the CPU 27. further reads out and stores information from a tag (not visible in detail) integrated in the dispensing device 1 holding and receiving information about the material contained within the dispensing device 1. Depending on the field of application the CPU is capable to receive and process a set of instructions, e.g. in the form of a computer program, to automatically prepare predetermined amounts of materials or a mixture of materials.

In a rack (not shown in detail) further dispensing devices 28 are stored. The further dispensing devices hold different materials on stock and may be interconnected to a control unit 20 either manually by hand or by an automated handling system. To avoid mistaking the dispensing devices 28 comprise a tag 29 which holds information about the material and the condition of the material stored in the dispensing device 28. The control unit 20 comprises means to read out and if appropriate modify the information of the tag. Thereby it is possible to significantly reduce the risk of mistaking.

To dispense material into a container 25 the container 25 is moved underneath the gate valve opening 4 and on the scaling device 21. In the herein shown embodiment the scaling device 21 is arranged such that it interacts with the container 25 to receive the material. In addition or alternatively a scaling device is incorporated in the bracket 19 interacting with the dispensing device 1 by measuring the amount of material exiting through the gate valve opening 4. Before the material is dispensed, the at least one scaling device 21 is reset. If necessary the agitator within the compartment of the dispensing device 1 is activated by the CPU to disperse the material stored in the compartment. After that, the gate valve opening 4 is opened sufficiently by retracting the blend 5 until material starts to trickle through the opening 4. The amount of material which has left the dispensing device is determined by the scaling device 21 and the information is made available to the CPU 27 for comparison to the total amount to be delivered. If necessary the conveyor means within the dispensing unit is activated to support the trickling of the material. The opening of the gate valve 4 is adjusted by the CPU 27 by the position of the blend until fully closing when the predetermined amount of material to be dispensed is achieved.

**Figure 5** shows an example of a hand held pipette 30 suitable to receive a cartridge 1 as shown in the Figures 1 to 4. **Figure 5** shows the pipette 30 in a front view (Figure 5b), in a side view from a right hand side (Figure 5c), in a side view from a left hand side (Figure 5a), in a top view (Figure 5e) and in a bottom view (Figure 5d). The pipette 30 is holding a cartridge 1 inserted in a cartridge holding device 31 arranged at the lower end of the pipette 30. The pipette 30 comprises a housing 32 with several control means 33, 34, 35, 36 to trigger and control the dispensing of material from cartridge 1. A control button 33 (first control means) protrudes laterally from the housing 32. The control button 33 serves to start and/or to stop the dispensing of material from the cartridge 1. On top of the housing 32 of the herein shown embodiment a first and a second turning knob 34, 35 (second and third control unit) are arranged. The first turning knob 34 is used to adjust the delay in the dispensing of material after the control button 33 has been pressed. The second turning knob 35 is used to adjust the delivery speed of the material to be dispensed. A further control means in form of a face gear 36 protrudes laterally from the housing 32. The face gear 36 is interconnected with an adjusting gear 54 to adjust the maximum opening of the gate valve opening 4 at the tip of the cartridge 1.

The functioning and the interaction of the dispensing device 1 and the pipette 30 are now described more detailed with reference to the **figures 6 and 7 . Figures 6** and **7** are showing the pipette 30 according to **figure 5** in a cut open view such that the inside of the pipette becomes visible. In **figure 6** the cartridge 1 is arranged below the pipette 1 in a not inserted manner such that the inside of the cartridge holding device 31 becomes visible. In **Figure 7** the cartridge, 1 is inserted into the cartridge holding device 31 and interconnected to the control means 33, 34, 35, 36.

Inside the housing 32 the pipette 30 comprises a driving means, here in form of an electro-motor 37 and a power supply in form of a battery pack 38. The electro-motor 37 is interconnected at its lower end to a clutch 39 suitable to be engaged with a standardised interface 13 of the drive shaft 11 of the cartridge 1 when inserted into the cartridge holding device 31 (see figure 7). The clutch 39 is spring loaded and may deflect backwards (z-direction) to overcome potential mismatch when the cartridge 1 is inserted into the cartridge holding device 31. The electro-motor 37 is arranged inside and interconnected to an axially displaceable bushing 40. The axially displaceable bushing 40 is arranged inside a guide tube 41 interconnected to the housing 32. The guide tube 41 meets at its lower end a quick connector 42 suitable to be interconnected to a first standardised interface 14 of the cartridge 1. The quick connector 42 acts as a standardised interface interconnectable with the standardised interface 14 of cartridges 1. This allows simple and easy exchanging of cartridges 1 from the pipette.

The quick connector 42 comprises a connector sleeve 43 with radial bores 44 in which a first row of radially displaceable spheres 45 are arranged. The spheres 45 protrude in an inner position above the inner surface 46 of the connector sleeve 43. The bores 44 have at their inner end a smaller diameter such that the spheres 45 may not fall out in this direction. A locking sleeve 47 surrounds the connector sleeve 43 on the outside. The connector sleeve 43 is arranged axially displaceable (z-direction) with respect to the housing 32 and comprises on the inside a circumferential groove 48 into which the spheres 45 may be displaced radially outwardly when the locking sleeve 47 is in a first rear position, when the circumferential groove 48 is aligned with the spheres 45. In this position the dispensing device 1 may be inserted into the cartridge holding device 31. In the herein shown embodiment the interlocking 14 of the cartridge 14 comprises a disk-like member 16 and a circumferential counter locking groove 17. When the interface means 14 is in contact with the connector sleeve 43 the locking sleeve 47 is moved in a second position where it locks the spheres 45 in an inner position engaged with the counter locking groove 17 of the cartridge 1. If appropriate the locking sleeve 47 is spring loaded such that it must be actively retracted into the first direction where the dispensing device 1 may be inserted.

In engaged position (see figure 7) the bushing 8 of the cartridge 1 is arranged behind a second row of radially outwardly displaceable spheres 49 which are arranged in second openings 50 of the axially displaceable bushing 41 and this position in front of a third circumferential groove 51 arranged along the inner wall of the connector sleeve 43. When the displaceable bushing 41 is moved in axial direction (z-direction) upward and away from the cartridge 1 the second spheres 49 are pressed out of the third radial groove 51 radially inwardly such that they engage behind the disk-like member 16. The second spheres 49 are acting as tappets for the disk-like member 16 such that the disk-like member 16 is moved relatively to the housing 2 of the dispensing device 1 and the blend 5 is retracted such that the gate valve opening 4 is opened such that material can be dispensed from the cartridge 1 inserted in the pipette 30.

The axially displaceable bushing 40 and the electro motor 36 are interconnected by a crossbar 53 to an in its length adjustable lifting rod 52. In the herein described embodiment the battery pack 38 comprises a central opening 60 in which lifting rod 52 is arranged. The lifting rod 52 comprises a lower part 54 and an upper part 55 which are connected to each other through a threaded bushing 56 with two antridromic threads 57, 58. The threaded bushing 56 is interconnected to the adjusting gear 59 by its hexagonal outside shape. A rotation of the face gear 36 is transmitted via the adjusting gear 59 onto the threaded bushing 56 whereby the upper and the lower part 54, 55 are screwed into or out of the threaded bushing 56 and the over all length of the lifting rod 52 is adjusted. The upper part 55 of the lifting rod 52 is interconnected by a lateral pin 63 to a ramp 64 of the control button 33. When the control button 33 is pressed inwardly the ramp 64 acts onto the lateral pin 63 and the lifting rod 52 is raised upwardly as indicated by arrow z1 (see **Detail E** of **figure 7**). As visible in **figures 6** and **7** the lower part 54 of the lifting rod 52 comprises an elongated hole 62 through which the crossbar 53 is arranged. In the shown position, when the gate valve opening 4 is sealingly closed by blend 5 and no material is dispensed, the crossbar 53 is arranged at the upper end of the elongated hole 62. In that the overall length of the lifting rod 52 is adjustable via the face gear 36, the position of the crossbar 53 in the elongated hole 62 and thereby the distance D of the crossbar 53 from the lower end of the elongated hole 62 can be modified. When the distance D is reduced the valve gate opening 4 is opened more because when pressing the control button 33 the lower part 54 of the lifting rod 52 gets in contact with the crossbar 53 earlier. Thereby the axially displaceable bushing 40 is lifted higher and the blend 5 of the inserted cartridge 1 is retracted further via the bushing 8. As a result of this the valve gate opening 4 is opened wider and more material can be dispensed per time. The opposite effect is achieved in that the distance D is increased.

When the control button 33 is pressed an electrical switch 65 is actuated and the lifting rod 52 is lifted via the interaction of the ramp 64 and the lateral pin 63. The electrical switch 65 is interconnected to an electronic circuit 66 which actuates an electromagnet 67 arranged inside the housing 32 above the rear end of the lifting rod 52. In that the lifting rod 52 is lifted, a holding disc 65 arranged at the rear end of the lifting rod 52, is attracted and finally gets in contact with the electromagnet 67 where it is securely held until the electromagnet 67 is switched off.

By the first turning knob 34 it is possible to adjust and determine via the electronic circuit 66 the time the electromagnet 67 is actuated and thereby how long the gate valve opening 4 remains open. By the second turning knob 35 the rotation speed of the electro motor 37 and the thereto interconnected agitator 10 of the inserted cartridge 1 is adjusted.

The electronic circuit 66 and the electric motor 37 are supplied by the battery pack 38. The battery pack 38 is preferably designed as a rechargeable battery pack 38. Alternatively or in addition it is possible to provide electric power by an external power supply which is e.g. interconnected to an appropriate socket or cable connection.

In a further embodiment the electronic circuit can be equipped with reading means and processing means to read out and process information of an inserted cartridge 1, e.g. stored in form of an electronic tag 29 (see Figure 4) or from a sensor means incorporated in the dispensing device or outside, e.g. indicating the fill level of the dispensing device 1. In addition or alternatively the pipette 30 can be equipped with an interface, e.g. RS232 and/or USB and/or Bluetooth (not shown in detail) by which it is possible to connect the pipette to a scaling means such that the amount of material dispensed from the cartridge can be determined directly or indirectly in relation to a signal of the scaling means. If appropriate the pipette 30 may therefore comprise additional display and/or adjusting means by which it e.g. becomes possible to predetermine the amount of material to be dispensed. By an online connection it becomes even possible to determine the delivery speed/flow rate at which the material is dispensed. Thereby the gate valve opening 4 can be shut close by the electronic circuit sufficiently early tacking into account that still material is on its way (falling) to the receiving vessel.

In stead of the described lifting mechanism 52 the gate valve opening can be opened and closed by a servo motor which is interconnected to the electronic circuit and triggered by a control button. Thereby it becomes possible to adjust the opening of the gate valve opening very accurately. In that the gate valve opening 4 can be adjusted infinitely it becomes further possible to reduce the flow rate against the end of a dispensing cycle in that the gate valve opening 4 is reduced.

The cartridges 1 may further comprise means (not shown in detail) by which they can be held in an external cartridge holder (not shown in detail) for holding and storing of several similar or different cartridges. The means are preferably designed such that the cartridges can be inserted into the cartridge holding device 31 of the pipette 30 without the need of manual handling of the cartridges. The holding means may e.g. be designed as a snap connection holding the cartridges only up to a certain level. If appropriate the dispensing device may be incorporated as a fixed element into the pipette.

## Claims

1. Pipette (30) for manual dispensing of solid material comprising a cartridge holding device (31),
**characterized in that** the cartridge holding device is interconnected to a dispensing device for storing and dispensing at least one material in solid form and the dispensing device comprises a housing (2) with a compartment (3) for storing a material, a gate valve (5) with a variable gate valve opening (4) for dispensing the material and at least one standardized interface (14) whereby the dispensing device (1) may be exchangeably interconnected to at least one control unit (20) having a corresponding interface to control the opening (4) of the gate valve (5).

2. Pipette according to claim 1 wherein the dispensing device is adapted to adjust the opening of the gate valve (5) in accordance to a signal of at least one scaling means (21) to control the amount of material dispensed.

3. Pipette according to one of the previous claims wherein the compartment (3) has a tapered lower section and the gate valve opening (4) is arranged at an apex of the tapered lower section.

4. Pipette according to one of the previous claims wherein the gate valve opening (4) is closed by a blend (5), said blend being supported by a rim of the gate valve opening.

5. Pipette according to claim 4 wherein the blend (5) is guided in a notch extending radially with respect to the valve gate opening (4).

6. Pipette according to one of the claims 4 or 5 wherein the blend (5) consists in a band of elastic material.

7. Pipette according to one of the previous claims wherein a scaling means is integrated in the dispensing device (1).

8. Pipette according to one of the previous claims wherein a scaling means is interconnected to a supporting means (19) supporting the dispensing device (1).

9. Pipette according to one of the previous claims wherein a scaling means is interconnected to a vessel (25) suitable to receive material dispensed from the dispensing device (1).

10. Pipette according to one of the previous claims wherein the dispensing device (1) comprises an agitator means (10) to agitate the material stored in the compartment.

11. Pipette according to claim 10 wherein the agitator means (10) comprises a standardized interface to interconnect the agitator means (10) to a control unit (20, 30),

12. Pipette according to one of the previous claims wherein the dispensing device (1) comprises at least one storing means (23) to hold information about the material stored in the compartment.

13. Pipette according to one of the previous claims wherein the dispensing device (1) comprises at least one drive unit to activate the blend and/or the agitator independently.

14. Pipette (30) according to any of the previous claims wherein the pipette (30) comprises a first driving means to open and/or close a valve gate opening (4) of a dispensing device (1) and a second driving means to activate a conveyor (10) to convey material from the dispensing device (1).

15. Pipette (39) according to claim 14 wherein the pipette comprises an electronic circuit to control the size of the valve gate opening (4) and/or the conveying speed of the conveyor (10).

16. Pipette (30) according to claim 15 wherein the pipette (30) comprises an interface to interconnect the electronic circuit to a signal of a scaling means.

17. Method for dispensing material by a dispensing device (1) connected to a pipette according to any of claims 1-16 comprising the following steps:
a) Interconnecting a dispensing device (1) comprising a material in a compartment (3) sealingly closed by a gate valve (5) to a control unit by a stadardized interface;
b) Dispensing material stored in the compartment (3) by opening a gate valve opening in function of a signal of a scaling means interconnected to the control unit in that the amount of material which has left the compartment of the dispensing device is determined;
c) Adjusting the position of the gate valve (4, 5) until fully closing of the gate valve opening when a predetermined amount of material (26) to be dispensed is achieved.

18. The method according to claim 17 wherein an agitator means (10) arranged in the compartment (3) agitates the material stored in the compartment (3) before or after the gate valve opening (4, 5) is opened.

19. The method according to claim 17 wherein the dispensing device (1) comprises a storing means (23) holding information about the material contained in the dispending device (1) and said information is exchanged with the control means (27).

20. The method according to claim 19 wherein the information is exchanged via the standardized interface.

## Patentansprüche

1. Pipette (30) für das manuelle Abgeben von festem Material, die eine Kartuschenhaltevorrichtung (31) umfasst, **dadurch gekennzeichnet, dass** die Kartuschenhaltevorrichtung mit einer Abgabevorrichtung zur Lagerung und Abgabe von mindestens einem Material in fester Form verbunden ist und die Abgabevorrichtung ein Gehäuse (2) mit einer Kammer (3) zur Lagerung eines Materials, einen Absperrschieber (5) mit einer variablen Absperrschieberöffnung (4) zum Abgeben des Materials und mindestens eine standardisierte Schnittstelle (14) aufweist, wobei die Abgabevorrichtung (1) mit mindestens einer Steuerungseinheit (20), die eine entsprechende Schnittstelle zur Steuerung der Öffnung (4) des Absperrschiebers (5) aufweist, auswechselbar verbunden sein kann.

2. Pipette gemäß Anspruch 1, wobei die Abgabevorrichtung für das Einstellen der Öffnung von dem Absperrschieber (5) gemäß einem Signal von mindestens einem Wiegemittel (21) zur Steuerung von der Menge des abgegebenen Materials geeignet ist.

3. Pipette gemäß einem der vorhergehenden Ansprüche, wobei die Kammer (3) einen konisch zulaufenden unteren Abschnitt aufweist und die Absperrschieberöffnung (4) an einer Kegelspitze des konisch zulaufenden unteren Abschnittes angeordnet ist.

4. Pipette gemäß einem der vorhergehenden Ansprüche, wobei die Absperrschieberöffnung (4) durch eine Schieberplatte (5) geschlossen wird, wobei die Schieberplatte durch eine Randlippe der Absperrschieberöffnung gestützt wird.

5. Pipette gemäß Anspruch 4, wobei die Schieberplatte (5) in einer Aussparung, geführt wird, welche sich radial in Bezug auf die Absperrschieberöffnung (4) erstreckt.

6. Pipette gemäß einem der Ansprüche 4 oder 5, wobei die Schieberplatte (5) aus einem Band eines elastischen Materials besteht.

7. Pipette gemäß einem der vorhergehenden Ansprüche, wobei ein Wiegemittel in die Abgabevorrichtung (1) integriert ist.

8. Pipette gemäß einem der vorhergehenden Ansprüche, wobei ein Wiegemittel mit einem Tragemittel (19) verbunden ist, welches die Abgabevorrichtung (1) trägt.

9. Pipette gemäß einem der vorhergehenden Ansprüche, wobei ein Wiegemittel mit einem Gefäß (25) verbunden ist, welches für die Aufnahme von dem durch die Abgabevorrichtung (1) abgegebenen Material geeignet ist.

10. Pipette gemäß einem der vorhergehenden Ansprüche, wobei die Abgabevorrichtung (1) eine Rühreinrichtung (10) zum Rühren des in der Kammer gelagerten Materials aufweist.

11. Pipette gemäß Anspruch 10, wobei die Rühreinrichtung (10) eine standardisierte Schnittstelle zum Verbinden der Rühreinrichtung (10) mit einer Steuerungseinheit (20, 30) aufweist.

12. Pipette gemäß einem der vorhergehenden Ansprüche, wobei die Abgabevorrichtung (1) mindestens ein Speichermittel (23) zum Enthalten von Informationen über das in der Kammer gelagerte Material ausweist.

13. Pipette gemäß einem der vorhergehenden Ansprüche, wobei die Abgabevorrichtung (1) mindestens eine Antriebseinheit aufweist, um die Schieberplatte und/oder die Rühreinrichtung unabhängig zu aktivieren.

14. Pipette (30) gemäß einem der vorhergehenden Ansprüche, wobei die Pipette (30) ein erstes Antriebsmittel zum öffnen und/oder Schließen einer Absperrschieberöffnung (4) einer Abgabevorrichtung (1) und ein zweites Antriebsmittel zum Aktivieren eines Fördermittels (10) zum Transportieren von Material aus der Abgabevorrichtung (1) aufweist.

15. Pipette (30) gemäß Anspruch 14, wobei die Pipette eine elektronische Schaltung zum Steuern der Größe von der Absperrschieberöffnung (4) und/oder von der Fördergeschwindigkeit des Förderers (10) aufweist.

16. Pipette (30) gemäß Anspruch 15, wobei die Pipette (30) eine Schnittstelle zum Verbinden der elektronischen Schaltung mit einem Signal eines Wiegemittels aufweist.

17. Verfahren zum Abgeben von Material durch eine Abgabevorrichtung (1), die mit einer Pipette gemäß einem der Ansprüche 1-16 verbunden ist, das die folgenden Schritte aufweist:
a) Verbinden einer Abgabevorrichtung (1), die ein Material in einer Kammer (3) enthält, welche durch einen Absperrschieber (5) dicht verschlossen ist, mit einer Steuerungseinheit durch eine standardisierte Schnittstelle;
b) Abgeben von Material, das in der Kammer (3) gelagert ist, durch öffnen einer Absperrschieberöffnung als Funktion von einem Signal eines Wiegemittels, das mit der Steuerungseinheit verbunden ist, damit die Menge des Materials, welches die Kammer der Abgabevorrichtung verlassen hat, bestimmt wird;
c) Einstellen der Position von dem Absperrschieber (4, 5) bis zum vollständigen Schließen der Absperrschieberöffnung, wenn eine vorbestimmte Menge des Materials (26), das abgegeben werden soll, erreicht ist.

18. Verfahren gemäß Anspruch 17, wobei eine Rühreinrichtung (10), die in der Kammer (3) angeordnet ist, das in der Kammer (3) gelagerte Material rührt, bevor oder nachdem die Absperrschieberöffnung (4, 5) geöffnet ist.

19. Verfahren gemäß Anspruch 17, wobei die Abgabevorrichtung (1) ein Speichermittel (23) aufweist, welches Informationen über das in der Abgabevorrichtung (1) enthaltene Material enthält, und diese Informationen werden mit der Steuerungseinrichtung (27) ausgetauscht.

20. Verfahren gemäß Anspruch 19, wobei die Informationen über eine standardisierte Schnittstelle ausgetauscht werden.

## Revendications

1. Pipette (30) pour distribution manuelle d'une matière solide comprenant un dispositif contenant une cartouche (31),
**caractérisée en ce que** le dispositif contenant une cartouche est interconnecté à un dispositif de distribution destiné à stocker et à distribuer au moins une matière sous forme solide et le dispositif de distribution comprend un logement (2) avec un compartiment (3) destiné à stocker une matière, un robinet-vanne (5) avec une ouverture de robinet-vanne variable (4) destinée à distribuer la matière et au moins une interface normalisée (14), de sorte que le dispositif de distribution (1) peut être interconnecté de manière échangeable à au moins une unité de commande (20) ayant une interface correspondante pour commander l'ouverture (4) du robinet-vanne (5).

2. Pipette selon la revendication 1, dans laquelle le dispositif de distribution est adapté pour ajuster l'ouverture du robinet-vanne (5) en conformité avec un signal d'au moins un moyen de graduation (21) pour commander la quantité de matière distribuée.

3. Pipette selon l'une des revendications précédentes, dans laquelle le compartiment (3) a une section inférieure effilée et l'ouverture de robinet-vanne (4) est agencée à un sommet de la section inférieure effilée.

4. Pipette selon l'une des revendications précédentes, dans laquelle l'ouverture de robinet-vanne (4) est fermée par un raccord (5), ledit raccord étant supporté par un rebord de l'ouverture de robinet-vanne.

5. Pipette selon la revendication 4, dans laquelle le raccord (5) est guidé dans une encoche s'étendant radialement par rapport à l'ouverture de robinet-vanne (4).

6. Pipette selon l'une des revendications 4 ou 5, dans laquelle le raccord (5) se compose d'une bande de matière élastique.

7. Pipette selon l'une des revendications précédentes, dans laquelle un moyen de graduation est intégré dans le dispositif de distribution (1).

8. Pipette selon l'une des revendications précédentes, dans laquelle un moyen de graduation est interconnecté à un moyen de support (19) supportant le dispositif de distribution (1).

9. Pipette selon l'une des revendications précédentes, dans laquelle un moyen de graduation est interconnecté à une cuve (25) appropriée pour recevoir une matière distribuée par le dispositif de distribution (1).

10. Pipette selon l'une des revendications précédentes, dans laquelle le dispositif de distribution (1) comprend un moyen agitateur (10) permettant d'agiter la matière stockée dans le compartiment.

11. Pipette selon la revendication 10, dans laquelle le moyen agitateur (10) comprend une interface normalisée pour interconnecter le moyen agitateur (10) à une unité de commande (20, 30).

12. Pipette selon l'une des revendications précédentes, dans laquelle le dispositif de distribution (1) comprend au moins un moyen de stockage (23) pour détenir les informations à propos de la matière stockée dans le compartiment.

13. Pipette selon l'une des revendications précédentes, dans laquelle le dispositif de distribution (1) comprend au moins une unité d'entraînement pour activer le raccord et/ou l'agitateur indépendamment.

14. Pipette (30) selon l'une des revendications précédentes, dans laquelle la pipette (30) comprend un premier moyen d'entraînement pour ouvrir et/ou fermer une ouverture de robinet-vanne (4) d'un dispositif de distribution (1) et un second moyen d'entraînement pour activer un convoyeur (10) pour acheminer une matière depuis le dispositif de distribution (1).

15. Pipette (30) selon la revendication 14, dans laquelle la pipette comprend un circuit électronique pour commander la taille de l'ouverture de robinet-vanne (4) et/ou la vitesse d'acheminement du convoyeur (10).

16. Pipette (30) selon la revendication 15, dans laquelle la pipette (30) comprend une interface pour interconnecter le circuit électronique à un signal d'un moyen de graduation.

17. Procédé de distribution d'une matière par un dispositif de distribution (1) raccordé à une pipette selon l'une quelconque des revendications 1 à 16, comprenant les étapes suivantes :
a) interconnexion d'un dispositif de distribution (1) comprenant une matière dans un compartiment (3) fermé de manière étanche par un robinet-vanne (5) à une unité de commande par une interface normalisée ;
b) distribution d'une matière stockée dans le compartiment (3) en ouvrant une ouverture de robinet-vanne en fonction d'un signal d'un moyen de graduation interconnecté à l'unité de commande pour que la quantité de matière qui a quitté le compartiment du dispositif de distribution soit déterminée ;
c) ajustement de la position du robinet-vanne (4, 5) jusqu'à totale fermeture de l'ouverture de robinet-vanne lorsqu'une quantité prédéterminée de matière (26) à distribuer est atteinte.

18. Procédé selon la revendication 17, dans lequel un moyen agitateur (10) agencé dans le compartiment (3) agite la matière stockée dans le compartiment (3) avant ou après que l'ouverture de robinet-vanne (4, 5) soit ouverte.

19. Procédé selon la revendication 17, dans lequel le dispositif de distribution (1) comprend un moyen de stockage (23) détenant des informations à propos de la matière contenue dans le dispositif de distribution (1) et lesdites informations sont échangées avec le moyen de commande (27).

20. Procédé selon la revendication 19, dans lequel les informations sont échangées via l'interface normalisée.
